# EUROPÄISCHE PATENTSCHRIFT

(11) **EP 0 941 183 B1**
(45) Veröffentlichungstag und Bekanntmachung des Hinweises auf die Patenterteilung: **21.06.2006**
(21) Anmeldenummer: 98948716.0
(22) Anmeldetag: 04.08.1998
(51) Int. Cl.: B60S 1/08, B60R 16/02

(54) **WISCHVORRICHTUNG**
WIPER DEVICE
DISPOSITIF D'ESSUYAGE

(30) Priorität: 26.09.1997 DE 19742657
(43) Veröffentlichungstag der Anmeldung: 15.09.1999
(73) Patentinhaber: ROBERT BOSCH GMBH, 70442 Stuttgart (DE)
(72) Erfinder: BRAUN, Peter, D-77830 Buehlertal (DE); MEIER, Hans, D-77833 Ottersweier (DE); BLITZKE, Henry, D-77815 Buehl (DE)
(86) Internationale Anmeldenummer: PCT/DE1998/002229
(87) Internationale Veröffentlichungsnummer: WO 1999/016647

(56) Entgegenhaltungen:
- EP-A- 0 057 892
- EP-A- 0 525 301
- WO-A-90/03903
- WO-A-96/11823
- US-A- 4 731 769

## Beschreibung

### Stand der Technik

Die Erfindung geht aus von einer Wischvorrichtung nach dem Oberbegriff des Hauptanspruchs.

Es ist eine Wischvorrichtung mit einem Regensensor am Markt bekannt, die die Wischfrequenz eines Kraftfahrzeugscheibenwischers in Abhängigkeit von der Regenintensität bzw. Benetzung einer Frontscheibe steuert. Es handelt sich dabei beispielsweise um optische Regensensoren, die infrarotes oder visuelles Licht eines Senders an einer Stelle in die Scheibe einkoppeln, über eine Meßstrecke innerhalb der Scheibe leiten und an einer weiteren Stelle auf einen Empfänger wieder aus der Scheibe auskoppeln. Die Intensität des vom Empfänger erfaßten Lichtes ist abhängig vom Grad der Benetzung der Scheibe im Bereich der Meßstrecke und wird als Sensorsignal einer Auswertung zugeführt.

Desweiteren wird über einen Lenkstockhebel von dem Kraftfahrzeugfahrer manuell die automatische Wischfunktion der Wischvorrichtung eingeschaltet.

Zusätzlich kann von dem Fahrer, ebenfalls manuell, über ein Rändelrad am Lenkstockhebel die Empfindlichkeit bzw. Sensibilität des Regensensors eingestellt werden.

Nachteilig hierbei ist, daß die Empfindlichkeitseinstellung des Regensensors über einen widerstandscodierten Schalter am Lenkstockhebel mit einem erhöhtem Aufwand verbunden ist, da hierzu zusätzlich ein Potentiometer, eine Stufenschaltung oder eine Widerstandsschaltung im Lenkstockhebel angeordnet sind.

Aus der WO-A-90/03903 ist ein Regensensor bekannt, bei dem Informationen über Empfindlichkeit oder Betriebszustand über eine Aneinanderreihung von 2 × 8 Leuchtdioden signalisiert werden.

### Vorteile der Erfindung

Die erfindungsgemäße Wischvorrichtung mit den kennzeichnenden Merkmalen des Hauptanspruchs hat den Vorteil, daß bei Kraftfahrzeugen die manuelle Empfindlichkeitseinstellung des Regensensors über ein, eventuell bereits vorhandenes, Display mit Tasten erfolgt.

Durch die in den Unteransprüchen aufgeführten Maßnahmen ergeben sich vorteilhafte Weiterbildungen und Verbesserungen der im Hauptanspruch angegebenen Merkmale. Besonders vorteilhaft ist, daß zur Einstellung der Empfindlichkeit das Display und die Tasten eines mit einem Datenbus des Kraftfahrzeugs angeschlossenen Radios verwendet werden. Aufgrund der Doppelnutzung des Radios kann so auf ein separates Display bzw. Bedienelement des Regensensors verzichtet werden.

Vorteilhaft ist weiterhin, daß ein Multifunktionsdisplay mit eigenen Tasten verwendet wird.

Ein weiterer Vorteil ergibt sich daraus, daß Radio und Multifunktionsdisplay zusätzlich für die Ansteuerung weiterer Steuergeräte im Kraftfahrzeug eingesetzt werden können, z.B. Kindersicherung der hinteren Türen, Schaltpunkte für die Getriebeautomatik, Sitzverstellungsmemory für verschiedene Fahrer, Programmierung von Ein- und Ausschaltzeiten und Temperatur einer Zusatzheizung. Dabei kann über eine bestimmte Tastenkombination ein Betriebsmode ausgewählt und Daten oder Funktionen eines einzelnen Steuergeräts verändert werden.

Vorteilhaft ist weiterhin, daß die Überführung des Radios in einen Programmiermode und die in diesem Programmiermode erfolgende Ansteuerung der Steuergeräte durch die Betätigung von lediglich zwei Tasten erfolgt. Diese Tasten sind vorzugsweise voneinander beabstandet, so daß keine ungewollte Programmierung ausgeführt wird. Dies gewährleistet eine benutzerfreundliche Auslegung des Radios und damit eine leichte Bedienbarkeit.

Zur Auswertung des Sensorsignales sind üblicherweise eine Signalaufbereitungsstufe bzw. eine Verstärkerstufe zur Aufbereitung und Verstärkung des Sensorsignales sowie eine Auswerteschaltung zur Auswertung des Sensorsignales im Hinblick auf die Ansteuerung der Scheibenwischer vorhanden. Ein weiterer Vorteil der erfindungsgemäßen Wischvorrichtung ist, daß die Empfindlichkeit des Regensensors durch Variation des Verstärkungsfaktors des Sensorsignals in der Signalaufbereitungsstufe bzw. der Verstärkerstufe erfolgt. Ebenso vorteilhaft ist jedoch auch die Einstellung der Empfindlichkeit durch Verändern einer in der Auswerteschaltung abgelegten Schwelle, die bei einem Unter- bzw. Überschreiten durch das Sensorsignal zu einem Auslösen oder Abschalten eines Wischbetriebs führt.

### Zeichnung

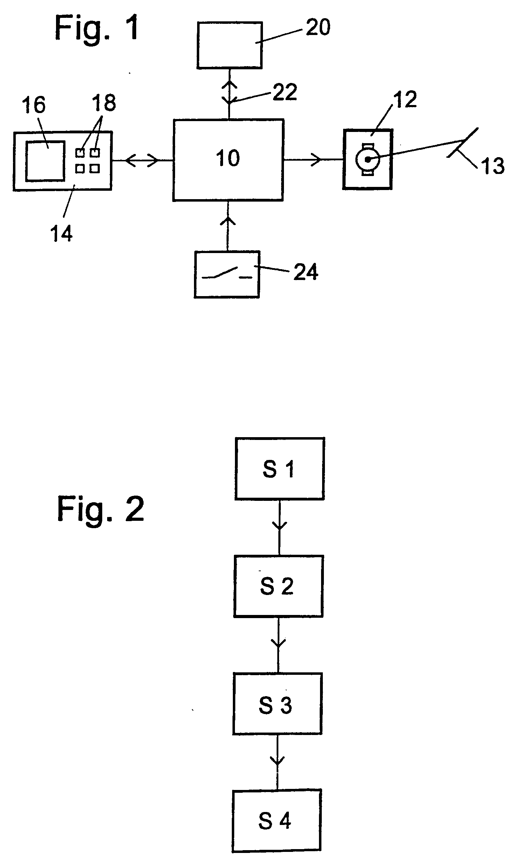

Ein Ausführungsbeispiel der Erfindung ist in der Zeichnung dargestellt und in der nachfolgenden Beschreibung näher erläutert. Es zeigt Figur 1 ein Blockschaltbild der Wischvorrichtung mit einem Regensensor, Figur 2 ein Ablaufdiagramm zur Einstellung der Empfindlichkeit des Regensensors an einem Autoradio.

### Beschreibung des Ausführungsbeispiels

Figur 1 zeigt eine Zentralelektronik 10 eines sternförmig angelegten Datennetzes in einem Kraftfahrzeug. Die Zentralelektronik 10 steuert einen Wischermotor 12 an, der wiederum einen skizziert dargestellten Scheibenwischer 13 antreibt. Ein Regensensor 20 liefert Sensorsignale 22 an die Zentralelektronik 10 zur automatischen Ansteuerung des Scheibenwischers 13.

Die Ansteuerung des Scheibenwischers 13 in einem Intervall-, Dauer- oder automatischen Wischbetrieb wählt der Kraftfahrzeugfahrer über die Betätigung eines Schaltelements 24, beispielsweise eines Lenkstockschalters oder eines Tasters, aus. Weiterhin kann der Fahrer über ein Bedienelement 14, z.B. ein Autoradio mit Display 16 und Tasten 18, Vorgaben bzw. Parameter für den Wischbetrieb eingeben oder ändern, beispielsweise Parameter zur automatischen Wischeransteuerung in Abhängigkeit von Sensorsignalen 22 des Regensensors 20.

Figur 2 zeigt ein Ablaufdiagramm zur Einstellung der Empfindlichkeit des Regensensors an dem Autoradio 14. Die Schritte S1 bis S4 beschreiben den Ablauf den der Fahrer zur Einstellung der Empfindlichkeit oder auch zur Einstellung anderer Parameter und Vorgaben durchführt.

Die erfindungsgemäße Wischvorrichtung nach Figur 1 funktioniert folgendermaßen.

Der Regensensor 20 ist üblicherweise auf einer Windschutzscheibe des Kraftfahrzeugs im Wischfeld des Scheibenwischers 13 angeordnet, erfaßt im wesentlichen die Benetzung der Scheibe mit Wasser und gibt in Abhängigkeit davon Sensorsignale 22 an die Zentralelektronik 10 aus. Bei Anwahl eines automatischen Wischbetriebs am Schaltelement 24 wird der Wischermotor 12 von der Zentralelektronik 10 derart angesteuert, daß der Wischbetrieb des Scheibenwischers 13 der Stärke des Niederschlags auf der Scheibe optimal angepaßt ist. Dazu sind Regensensor 20 und Zentralelektronik 10 über eine bidirektionale Datenleitung eines Kraftfahrzeug-Datenbusses verbunden, wobei die Zentralelektronik 10 beim Einschalten des automatischen Wischbetriebs den Regensensor 20 aktiviert und diesem durch den Fahrer eingestellte Parameter übermittelt und der Regensensor 20 die Sensorsignale 22 zur Ansteuerung des Wischermotors 12 an die Zentralelektronik 10 abgibt.

Die Auswertung des Sensorsignales 22 zur Ansteuerung des Wischermotors 12 erfolgt im Regensensor 20 durch einen Mikrocontroller. Dazu werden einige Parameter im Mikrocontroller abgelegt, die Einfluß auf die Empfindlichkeit bzw. Sensibilität des Regensensors 20 haben. Einer dieser Parameter ist der Verstärkungsfaktor zur Verstärkung des Sensorsignales 22, so daß das Sensorsignal 22 zwischen den Grenzen eines vorgegebenen Arbeitsbereiches liegt. Eine Veränderung des Verstärkungsfaktors wirkt sich unmittelbar auf die Ansprechempfindlichkeit des Regensensors 20 bzw. Auflösung des Sensorsignales 22 und damit auf die Ansteuerung eines oder mehrerer Scheibenwischer 13 aus.

Weitere Parameter sind die im Mikrocontroller hinterlegten Schwellen, bei denen bei Erreichen durch das Sensorsignal 22 ein Wischbetrieb ausgelöst oder abgeschaltet wird. Dafür sind unterschiedliche Ein- und Ausschaltschwellen bekannt, wie zum Beispiel die Schwellen für einen Dauerwischbetrieb in langsamer oder schneller Geschwindigkeitsstufe, für einen Intervallwischbetrieb oder die Einschaltschwelle für die Einzelauslösung eines einzelnen Wischzyklusses.

Diese Schwellen sind weiterhin abhängig von den Umgebungslichtverhältnissen. So ist die von der Einschaltschwelle für einen beliebigen Wischbetrieb abhängige Empfindlichkeit üblicherweise in der Nacht höher eingestellt als am Tage, da einzelne Regentropfen auf der Scheibe nachts die Sicht des Fahrers stärker beeinträchtigen und er bei entgegenkommenden Verkehr geblendet wird. Die von den Tag-Schwellen unterschiedlichen Nacht-Schwellen führen daher zu einem schnelleren Auslösen eines Wischbetriebes.

Weiterhin gibt es eine Schaltschwelle zum Hin- und Herschalten zwischen den Tag- und Nacht-Schwellen, d.h. daß in Abhängigkeit von der erfaßten Umgebungslichtmenge entweder die Tag- oder die Nacht-Schwelle Verwendung findet.

Auf diese Parameter kann der Fahrer nun Einfluß nehmen, indem er über das Radio 14 mit seinem Display 16 und Tasten 18 Eingaben für den Betrieb des Regensensors 20 macht. Über das Radio 14 programmiert er demzufolge den Mikrocontroller des Regensensors 20. So sind für die oben genannten Parameter Bereiche im Mikrocontroller vorgegeben, in denen der Fahrer die Parameter nach eigenen Vorstellungen und Wünschen innerhalb der jeweils gültigen Grenzen variieren kann.

Selbstverständlich kann der Fahrer auch zusätzlich die Möglichkeit erhalten, Parameter des Intervall- oder Dauerwischbetriebs über das Radio 14 zu verändern. Zum Beispiel kann er die Geschwindigkeit der einzelnen Geschwindigkeitsstufen vorgeben, die Wischgeschwindigkeit stufenlos oder das Grundintervall des Intervallwischbetriebs nach eigenen Präferenzen einstellen.

Aufgrund der Betätigung der Tasten in einer bestimmten Kombination wird der Fahrer aus dem Radiobetrieb in den Programmiermodus gelangen. Bei Verwendung eines benutzerfreundlichen Displays 16 werden die Funktionen der Tasten 18, die in dem Fall mindestens doppelt belegt sind, durch Leuchtdioden (LED) unterschiedlich gekennzeichnet und sind daher für den Fahrer leicht zu erkennen. Damit ist das Radio 14, 16, 18 benutzerfreundlich zu bedienen.

Auf dem Display 16 liest der Fahrer den einzustellenden Parameter ab und erkennt anhand einer numerischen oder einer graphischen Darstellung, beispielsweise Balken- oder Stufendiagramme, den aktuellen Wert des Parameters, den er über entsprechende Tasten 18 verändern kann. Dazu gehören beispielsweise Tasten 18 für die Lautstärkeregelung des Radios (+/-) oder für die Sendereinstellung von ausgewählten Radiofrequenzen.

Anhand Figur 2 wird ein Verfahren zur Programmierung über das Radio 14 in vier Schritten S1 - S4 beschrieben, das sich dadurch auszeichnet, daß mit lediglich zwei Tasten 18 am Radio 14 ohne zusätzlichen Aufwand beliebig viele weitere Parameter des Regensensors (20) oder weitere Einrichtungen zu programmieren sind. Dieses Verfahren ist jedoch nur beispielhaft, weitere bekannte Verfahren sind ebenfalls zu verwenden.

Als erster Taster 18 werden vorzugsweise Wipptaster verwendet, z.B. Sendersuchlauf oder Lautstärkeregelung, da mit diesen mehr als zwei Zustände (z.B. an/aus) leicht eingestellt werden können. Desweiteren wird als zweiter Taster 18 ein Drucktaster benötigt, z.B. Bandwahltaster für die Wahl des Frequenzbandes oder Verkehrsfunktaster für die Einstellung der Verkehrsfunkdurchsagen.

Im ersten Schritt S1 wird das Radio 14 in den Programmiermodus überführt, indem beim Einschalten des Radios 14 gleichzeitig erster und zweiter Taster 18 betätigt werden, die jedoch nicht direkt nebeneinander angeordnet sind, um ein ungewolltes Umschalten in den Programmiermodus zu verhindern. Beispielsweise betätigt der Fahrer den Verkehrsfunk-Drucktaster und die Sendersuchlauf-Wipptaster. Das Radio 14 wird dadurch direkt in den Programmiermodus überführt, der durch das alphanumerische Display 16 (RDS) angezeigt wird.

Im zweite Schritt S2 betätigt der Fahrer den Wipptaster und ruft damit sukzessiv mit jedem Drücken nacheinander die zu programmierenden Geräte auf. Er betätigt folglich den Wipptaster so häufig bis das Diplay 16 z.B. "Regensensor" anzeigt und bestätigt seine Wahl mit dem Drucktaster.

Im dritten Schritt S3 werden wie im Schritt S2 sukzessiv die Funktionen aufgerufen, die durch den Fahrer eingestellt werden können. Erscheint nach ein- oder mehrmaligen Drücken des Wipptasters auf dem Display 16 z.B. "Empfindlichkeit", dann bestätigt der Fahrer dies mit dem Drucktaster. Das Display 16 zeigt daraufhin die aktuelle Einstellung der Empfindlichkeit graphisch oder numerisch an.

Bei Schritt S4 verändert der Fahrer diese Einstellung nach eigenen Wünschen innerhalb der durch den Fahrzeughersteller vorgegebenen Grenzen mittels des Wipptasters und bestätigt dies wiederum mit dem Drucktaster. Diese (letzte) Bestätigung z.B. schaltet das Radio 14 automatisch aus dem Programmiermodus in den Radiomodus und leitet die Eingaben des Fahrers an den Mikrocontroller des Regensensors (20) über den Datenbus.

Wenn im Programmiermodus für eine vorgegebene Zeitspanne von z.B. 20 Sekunden keine Eingabe durch den Fahrer erfolgt ist, wird der Programmiermodus abgebrochen und der Radiomodus eingeleitet.

In Abänderung des Ausführungsbeispiels wird ein Multifunktionsdisplay 16 mit eigenen Tasten 18 eingesetzt. Über dieses kann beispielsweise bereits die Ansteuerung anderer Einrichtungen durch den Fahrer erfolgen, z.B. Sitzverstellung. Ebenso können fahrzeug- oder straßenrelevante Daten dem Fahrer über das Display 16 angezeigt werden, wie z.B. Temperatur, Schadstoffgehalt im Fahrzeuginnenraum oder Staumeldungen etc. Dieses Multifunktionsdisplay 16 wird erfindungsgemäß zur Empfindlichkeitseinstellung des Regensensors 20 verwendet, wobei auf die oben beschriebenen Parameter durch den Fahrer Einfluß genommen wird.

In einer zu dem Ausführungsbeispiel alternativen Ausgestaltung wird anstelle einer Zentralelektronik 10 mit sternförmig angelegten Datenkommunikationsleitungen zur indirekten Ansteuerung der Kraftfahrzeugeinrichtungen und insbesondere des Regensensors 20 eine andere z.B. ringförmige Anordnung gewählt, so daß der Mikrocontroller des Regensensors 20 direkt, d.h. ohne Umweg über die Zentralelektronik 10, durch Betätigung der Tasten 18 durch den Fahrer angesteuert wird. Die Verwendung eines Autoradios 14 oder eines Multifunktionsdisplays 16 mit Tasten 18 als Bedienelement 14 ist hierbei ebenfalls vorgesehen.

In jedem der vorgenannten Ausführungsbeispiele werden darüberhinaus weitere Einrichtungen durch den Fahrer über das Display 16 und die Tasten 18 angesteuert. Beispielsweise seien erwähnt: Kindersicherung der hinteren Türen, Schaltpunkte für die Getriebeautomatik, Sitzverstellungsmemory für verschiedene Fahrer, Programmierung von Ein- und Ausschaltzeiten und Temperatur einer zusatzheizung usw.

## Patentansprüche

1. Wischvorrichtung zur Ansteuerung einer Einrichtung, insbesondere eines Kraftfahrzeug-Scheibenwischers (13), mit einem Regensensor (20) zur Erfassung und Auswertung der Benetzung einer Scheibe hinsichtlich der Ansteuerung der Einrichtung, insbesondere mit einem Mikrocontroller, und einem damit zusammenwirkenden Bedienelement (14) zur Einstellung einer Empfindlichkeit des Regensensors (20), **dadurch gekennzeichnet, dass** das Bedienelement (14) zur optisch erkennbaren Empfindlichkeitseinstellung mindestens ein alphanumerisches bzw. graphisches Display (16) und Tasten (18) aufweist und als Bedienelement (14) ein Autoradio zu verwenden ist, das ebenfalls zur Ansteuerung von weiteren im Kraftfahrzeug befindlichen Einrichtungen verwendet wird.

2. Wischvorrichtung zur Ansteuerung einer Einrichtung, insbesondere eines Kraftfahrzeug-Scheibenwischers (13), mit einem Regensensor (20) zur Erfassung und Auswertung der Benetzung einer Scheibe hinsichtlich der Ansteuerung der Einrichtung, insbesondere mit einem Mikrocontroller, und einem damit zusammenwirkenden Bedienelement (14) zur Einstellung einer Empfindlichkeit des Regensensors (20), wobei das Bedienelement (14) zur optisch erkennbaren Empfindlichkeitseinstellung mindestens ein Display (16) und Tasten (18) aufweist, **dadurch gekennzeichnet, dass** als Bedienelement (14) ein alphanumerisches bzw. graphisches Multifunktionsdisplay (16) mit Tasten (18) zu verwenden ist, das ebenfalls zur Ansteuerung von weiteren im Kraftfahrzeug befindlichen Einrichtungen verwendet wird.

3. Wischvorrichtung nach Anspruch 1 oder 2, **dadurch gekennzeichnet, daß** die Verstellung der Empfindlichkeit des Regensensors (20) durch Ändern eines oder mehrerer Parameter erfolgt, vorzugsweise durch Variieren eines Verstärkungsfaktors oder Einstellen einer oder mehrerer Schwellen für die Ansteuerung der Einrichtung.

4. Wischvorrichtung nach einem der vorhergehenden Ansprüche, **dadurch gekennzeichnet, daß** der Regensensor (20) und das Bedienelement (14, 16, 18) an einen Datenbus des Kraftfahrzeuges angeschlossen sind.

5. Wischvorrichtung nach Anspruch 4, **dadurch gekennzeichnet, daß** der Regensensor (20) über den Datenbus von einer Zentralelektronik (10) des Kraftfahrzeugs einstellbar ist.

6. Wischvorrichtung nach Anspruch 1, **dadurch gekennzeichnet, daß** das Autoradio (14) durch die Betätigung von einem ersten und einem zweiten Taster (18) in den Programmiermodus überführbar und/oder der Regensensor (20) oder weitere Einrichtungen programmierbar sind.

7. Wischvorrichtung nach Anspruch 6, **dadurch gekennzeichnet, daß** als erster Taster (18) ein Wipptaster und als zweiter Taster (18) ein Drucktaster vorgesehen ist.

8. Wischvorrichtung nach Anspruch 6 oder 7, **dadurch gekennzeichnet, daß** bei gleichzeitiger Betätigung des ersten und zweiten Tasters (18) beim Einschalten des Autoradios (14) dieses in den Programmiermodus zu überführen ist.

9. Wischvorrichtung nach Anspruch 6 oder 7, **dadurch gekennzeichnet, daß** durch ein- oder mehrmalige Betätigung des ersten Tasters (18) eine Auswahl aus mehreren vorgegebenen Möglichkeiten erfolgt und durch einmalige Betätigung des zweiten Tasters (18) diese Auswahl bestätigt wird.

## Claims

1. Wiping apparatus for actuating a device, in particular a motor-vehicle wiper (13), having a rain sensor (20) for detecting and evaluating the degree of wetting of a pane with regard to actuating the device, in particular having a microcontroller, and an operator control element (14) which interacts with the said device and serves to set the sensitivity of the rain sensor (20), **characterized in that** the operator control element (14) has at least one alphanumeric or graphical display (16) and keys (18) for the purpose of setting the sensitivity in a visually identifiable manner, and the operator control element (14) to be used is a car radio which is also used to actuate other devices which are located in the motor vehicle.

2. Wiping apparatus for actuating a device, in particular a motor-vehicle wiper (13), having a rain sensor (20) for detecting and evaluating the degree of wetting of a pane with regard to actuating the device, in particular having a microcontroller, and an operator control element (14) which interacts with the said device and serves to set the sensitivity of the rain sensor (20), the operator control element (14) having at least one display (16) and keys (18) for the purpose of setting the sensitivity in a visually identifiable manner, **characterized in that** the operator control element (14) to be used is an alphanumeric or graphical multifunctional display (16) which has keys (18) and is also used to actuate other devices which are located in the motor vehicle.

3. Wiping apparatus according to Claim 1 or 2, **characterized in that** the sensitivity of the rain sensor (20) is adjusted by changing one or more parameters, preferably by varying an amplification factor or setting one or more thresholds for actuating the device.

4. Wiping apparatus according to one of the preceding claims, **characterized in that** the rain sensor (20) and the operator control element (14, 16, 18) are connected to a data bus of the motor vehicle.

5. Wiping apparatus according to Claim 4, **characterized in that** the rain sensor (20) can be set by a central electronics system (10) of the motor vehicle by means of the data bus.

6. Wiping apparatus according to Claim 1, **characterized in that** the car radio (14) can be changed over to the programming mode and/or the rain sensor (20) or other devices can be programmed by operation of a first and a second momentary-contact switch (18).

7. Wiping apparatus according to Claim 6, **characterized in that** the first momentary-contact switch (18) provided is a momentary-contact rocker switch, and the second momentary-contact switch (18) provided is a momentary-contact pushbutton.

8. Wiping apparatus according to Claim 6 or 7, **characterized in that** the car radio (14) can be changed over to the programming mode if the first and second momentary-contact switches (18) are operated simultaneously when the said car radio is switched on.

9. Wiping apparatus according to Claim 6 or 7, **characterized in that** one of a plurality of predefined options is selected by operating the first momentary-contact switch (18) once or more than once, and this selection is confirmed by operating the second momentary-contact switch (18) once.

## Revendications

1. Dispositif d'essuyage pour commander une installation, notamment un essuie-glace de véhicule automobile (13), comportant un capteur de pluie (20) pour saisir et exploiter le mouillage d'une vitre et commander l'installation, notamment à l'aide d'un micro-contrôleur et un élément de manoeuvre (14) coopérant avec celui-ci pour régler la sensibilité du capteur de pluie (20),
**caractérisé en ce que**
l'élément de manoeuvre (14) comporte au moins un afficheur alphanumérique ou graphique (16) et des touches (18) pour présenter optiquement le réglage de la sensibilité et l'élément de manoeuvre (14) est un autoradio également utilisé pour commander d'autres installations équipant le véhicule automobile.

2. Dispositif d'essuyage pour commander une installation, notamment un essuie-glace de véhicule automobile (13), comportant un capteur de pluie (20) pour saisir et exploiter le mouillage d'une vitre et commander l'installation, notamment à l'aide d'un micro-contrôleur et un élément de manoeuvre (14) coopérant avec celui-ci pour régler la sensibilité du capteur de pluie (20),
**caractérisé en ce que**
l'élément de manoeuvre (14) est un afficheur multifonctions alphanumérique ou graphique (16) comportant des touches (18) servant également à commander d'autres équipements du véhicule.

3. Dispositif d'essuyage selon la revendication 1 ou 2,
**caractérisé en ce que**
le réglage de la sensibilité du capteur de pluie (20) se fait par modification d'un ou plusieurs paramètres, de préférence en modifiant un coefficient d'amplification ou en réglant un ou plusieurs seuils pour la commande de l'installation.

4. Dispositif d'essuyage selon l'une des revendications précédentes,
**caractérisé en ce que**
le capteur de pluie (20) et l'élément de manoeuvre (14, 16, 18) sont reliés à un bus de données du véhicule automobile.

5. Dispositif d'essuyage selon la revendication 4,
**caractérisé en ce que**
le capteur de pluie (20) est réglable par l'intermédiaire du bus de données à partir de l'électronique centrale (10) du véhicule automobile.

6. Dispositif d'essuyage selon la revendication 1,
**caractérisé en ce que**
l'autoradio (14) peut être mis en mode de programmation par l'actionnement d'une première et d'une seconde touche (18) et/ou le capteur de pluie (20) ou d'autres installations sont programmables.

7. Dispositif d'essuyage selon la revendication 6,
**caractérisé en ce que**
la première touche (18) est une touche basculante et la seconde touche (18) est un bouton-poussoir.

8. Dispositif d'essuyage selon la revendication 6 ou 7,
**caractérisé en ce qu'**
en commandant simultanément la première et la seconde touche (18) lors du branchement de l'autoradio (14) celui-ci passe en mode de programmation.

9. Dispositif d'essuyage selon la revendication 6 ou 7,
**caractérisé en ce que**
l'actionnement simple ou répété de la première touche (18) sélectionne parmi plusieurs possibilités et l'actionnement unique de la seconde touche (18) confirme cette sélection.
